# EUROPÄISCHE PATENTSCHRIFT

(11) **EP 0 980 625 B1**
(45) Veröffentlichungstag und Bekanntmachung des Hinweises auf die Patenterteilung: **15.09.2004**
(21) Anmeldenummer: 98933485.9
(22) Anmeldetag: 08.05.1998
(51) Int. Cl.: H04M 3/42

(54) **VERFAHREN UND ANORDNUNG ZUM VERWALTEN VON LEISTUNGSMERKMALEN FÜR FERNSPRECHTEILNEHMER**
METHOD AND DEVICE FOR MANAGING PERFORMANCE CHARACTERISTICS FOR TELEPHONE SUBSCRIBERS
PROCEDE ET DISPOSITIF POUR LA GESTION DE CARACTERISTIQUES DE QUALITE DE TRANSMISSION POUR DES ABONNES AU TELEPHONE

(30) Priorität: 09.05.1997 DE 19719704
(43) Veröffentlichungstag der Anmeldung: 23.02.2000
(73) Patentinhaber: SIEMENS AKTIENGESELLSCHAFT, 80333 München (DE)
(72) Erfinder: UNGRUH, Joachim, D-80638 München (DE); KROB, Silvia, D-81541 München (DE); KURZAWA, Hendrik, D-81379 München (DE); SCHMIDT, Christian, D-86163 Augsburg (DE); LANGE, Thomas, D-84034 Landshut (DE); LINDENTHAL, Andreas, D-81247 München (DE)
(74) Vertreter: Berg, Peter, Dipl.-Ing.
(86) Internationale Anmeldenummer: PCT/DE1998/001290
(87) Internationale Veröffentlichungsnummer: WO 1998/052336

(56) Entgegenhaltungen:
- WO-A-97/06625
- WO-A-97/23988
- WO-A-97/31491
- SEVCIK M ET AL: "CUSTOMERS IN DRIVER'S SEAT: PRIVATE INTELLIGENT NETWORK CONTROL POINT" ISS '95. WORLD TELECOMMUNICATIONS CONGRESS. (INTERNATIONAL SWITCHIN SYMPOSIUM), ADVANCED SWITCHING TECHNOLOGIES FOR UNIVERSAL TELECOMMUNICATIONS AT THE BEGINNING OF THE 21ST. CENTURY BERLIN, APR. 23 - 28, 1995, Bd. 2, Nr. SYMP. 15, 23. April 1995, Seiten 41-44, XP000495622 VERBAND DEUTSCHER ELEKTROTECHNIKER (VDE) ET AL

## Beschreibung

Die Erfindung betrifft ein Verfahren zum Verwalten von Leistungsmerkmalen für Fernsprechteilnehmer sowie eine Anordnung zur Durchführung dieses Verfahrens.

Den Fernsprechteilnehmern wird heutzutage in der Fernsprechvermittlungsstelle, an die diese angeschlossen sind, eine Vielzahl von Leistungsmerkmalen zur Verfügung gestellt. Üblicherweise erfolgt die Verwaltung solcher Leistungsmerkmale, also das Einrichten und gegebenenfalls Ändern derselben von einer zentralen für eine Vielzahl von Fernsprechvermittlungsstellen zuständigen Stelle, einem sogenannten O&M-Center (Operation & Maintenance) aus. Für eine Vielzahl von Leistungsmerkmalen muß jedoch auch die Möglichkeit gegeben sein, daß der Teilnehmer selbst auf eine Leistungsmerkmalverwaltung Einfluß nehmen kann.

Bisher wird in diesem Zusammenhang so vorgegangen, daß der Teilnehmer der Fernmeldeverwaltung seinen Einrichtungs- oder Änderungswunsch eines Leistungsmerkmals mitteilt und daraufhin die entsprechenden administrativen Aufgaben durch das Bedienpersonal in der zuständigen Ferrisprechvermittlungsstelle durchgeführt werden. Es handelt sich hierbei natürlich um einen personalaufwendigen Vorgang, der außerdem lange Wartezeiten bis zur Ausführung der Kundenwünsche mit sich bringt.

Für Leistungsmerkmale, bei denen dies nicht hinzunehmen ist, besteht daher die Möglichkeit, daß die Fernsprechteilnehmer durch Eingabe von Ziffernkombinationen Leistungsmerkmale vom Endgerät aus zu aktivieren und gegebenenfalls zu ändern. Die hierzu erforderlichen Prozeduren sind allerdings wegen der Vielzahl der in Frage kommenden Leistungsmerkmale kompliziert und wenig benutzerfreundlich.

Aus der internationalen Patentanmeldung WO 97/06625 ist eine Vorrichtung zur computergesteuerten Telephonie bekannt, welches ein Datenterminal für einen Teilnehmer umfaßt, der beabsichtigt, Telekommunikationsdienste in einem öffentlichen Telekommunikationsnetz zu verwalten. Hierbei kommuniziert ein Server mit dem öffentlichen Telekommunikationsnetz. Der Server umfaßt eine sogenannte API-Schnittstelle (Application program interface) und das Teilnehmerdatenterminal, welches mit dem Server verbunden ist und die API-Schnittstelle zur Verwaltung von Telekommunikationsdiensten verwendet. Als Kommunikationsmittel dient vorzugsweise das Intelligente Netzwerk IN einschliesslich seines Protokolls INAP. Diese Vorrichtung weist jedoch diegleichen vorstehend genannten Nachteile hinsichtlich Kompliziertheit und Benutzerunfreundlichkeit auf.

Die Aufgabe der Erfindung besteht darin, ein Verfahren anzugeben, das das Verwalten von Leistungsmerkmalen für Fernsprechteilnehmer gegenüber den bisherigen Verhältnissen weniger zeitaufwendig und komfortabler macht.

Zur Lösung dieser Aufgabe weist ein solches Verfahren die Merkmale des Kennzeichens des Patentanspruches 1 auf.

Es wird dementsprechend die für eine solche Verwaltung erforderliche Kommunikation zwischen einer die Verwaltung vornehmenden Stelle und der Fernsprechvermittlungsstelle, in der die die Leistungsmerkmale betreffende Datenbasis enthalten ist, unter Ausnutzung einer Internet-Verbindung eines mit einem Display versehenen und mit einem Internet-Browser arbeitenden am Ort der die Verwaltung vornehmenden Stelle befindlichen Datenendgerät abgewickelt. Es ist hierzu ein Internet-Server eingerichtet, der einerseits über eine Internet-Verbindung mit dem Datenendgerät und andererseits über eine Fernmeldeverbindung mit der genannten Fernsprechvermittlungsstelle kommunizieren kann.

Für die Verwaltung von Leistungsmerkmalen ist hiermit eine grafische Benutzeroberfläche zur Verfügung gestellt, die für solche Aufgaben besonders prädestiniert ist.

Die Vorteile der Erfindung kommen besonders in dem oben diskutierten Anwendungsfall zum Tragen, bei dem die Leistungsmerkmalsverwaltung vom Fernsprechteilnehmer selbst vorgenommen werden können soll, wie dies im Patentanspruch 2 angegeben ist. Die Verwaltung kann also von dessen Personal Computer aus vorgenommen werden und die Bereitstellung eines besonderen Fernsprechendgerätes ist nicht erforderlich.

Das erfindungsgemäße Verfahren kann aber auch für die Vermittlungsstellenverwaltung einschließlich der Verwaltung von Teilnehmerleistungsmerkmalen von einer Service-Zentrale, dem erwähnten O&M-Center, aus mit Vorteil angewendet werden.

Gemäß den Patentansprüchen 3 und 4 kann der Zugriff des Datenendgerätes auf das Internet über das Fernsprechnetz erfolgen, was in der Regel dann der Fall sein wird, wenn die Verwaltung durch den Fernsprechteilnehmer erfolgt oder aber über eine Datenleitungsverbindung erfolgen, was eher dann der Fall sein wird, wenn die Verwaltung von einer Service-Zentrale aus vorgenommen wird.

In Anspruch 5 ist eine zweckmäßige Anordnung zur Durchführung des erfindungsgemäßen Verfahrens angegeben. Der erwähnte Internet-Server ist demnach Bestandteil eines in eine Fernsprechvermittlungsstelle integrierten Einwählknotens für das Internet. Zur Ermöglichung einer Kommunikation mit der Vermittlungstechnik dieser Fernsprechvermittlungsstelle enthält der Internet-Server eine vermittlungstechnische Applikation, die einer vermittlungstechnischen Applikation entspricht, durch die die Vermittlungstechnik der genannten Fernsprechvermittlungsstelle ergänzt ist.

Nachstehend wird die Erfindung anhand eines Ausführungsbeispiels unter Bezugnahme auf eine Figur näher erläutert.

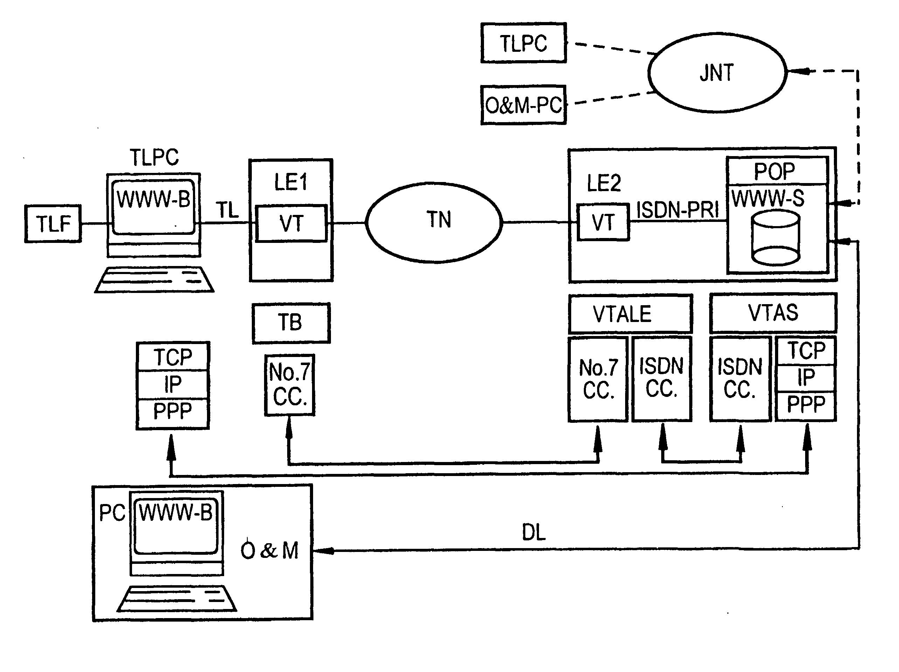

Die Figur dient in erster Linie der Erläuterung der Verhältnisse bei einer Verwaltung von Teilnehmerleistungsmerkmalen durch den Fernsprechteilnehmer selbst.

Sie zeigt ein Telefonnetz TN, zu dem auch eine erste Fernsprechortsvermittlungsstelle LE1 und eine zweite Fernsprechortsvermittlungsstelle LE2 gehören. Bei der Orstvermittlungsstelle LE1 ist der Anschluß eines Fernsprechendgerätes TLF und eines Personal Computers TLPC eines Fernsprechteilnehmers über eine Teilnehmeranschlußleitung TLA gezeigt.

Als Bestandteil der Ortsvermittlungsstelle LE2 ist ein Einwählknoten POP in das Internet angedeutet.

Der Personal Computer TLPC soll über ein nicht dargestelltes Modem Zugang zum Telefonnetz T und von da über den erwähnten Einwählknoten POP Zugang zum Internet haben. Er soll über einen Browser, beispielsweise WWW-Browser (Word Wide Web) verfügen, also eine Möglichkeit und eine komfortable grafische Oberfläche zum Zugriff und zur Darstellung von im Internet verfügbaren Daten. Zur Veranschaulichung einer solchen Internet-Verbindung sind beim Personal Computer des Teilnehmers TLPC und bei Einwählknoten POP Blöcke mit Feldern TCP, IP und PPP gezeigt, die auf die bei einer Kommunikation über das Internet zur Anwendung kommenden Protokolle Transmission Control Protokoll (TCP), Internet-Protokoll (IP) und Point-To-Point Protokoll (PPP) hinweisen.

Bei den Ortsämtern LE1 und LE2 ist mit VT die für das Zustandekommen von Fernsprechverbindungen wesentliche Vermittlungstechnik-Software bezeichnet. Bei der Ortsvermittlungsstelle LE1 ist außerdem mit TB die Teilnehmerdatenbasis angedeutet, in der sich auch die Einträge für Teilnehmerleistungsmerkmale befinden.

Zum als Bestandteil der Ortsvermittlungsstelle LE2 gezeigten Internet-Einwählknoten POP gehört ein spezieller Internet-Server, hier ein WWW-Server. Dieser Server ist so gestaltet, daß er einerseits über eine Internet-Verbindung also unter Verwendung der erwähnten Protokolle TCP/IP mit einem Internet-Teilnehmer, hier also mit dem Personal Computer TLPC kommunizieren kann, andererseits auch über eine Fernsprechverbindung mit der Ortsvermittlungsstelle LE1 Informationen austauschen kann. Um dies zu ermöglichen, ist dieser Server, wie in der Figur angedeutet, mit einer vermittlungstechnischen Applikation VTAS ausgestattet, die einer vermittlungstechnischen Applikation VTALE entspricht, um die die Vermittlungstechnik VT des Ortsamtes LE2 erweitert ist.

In der Figur ist außerdem noch ein Service-Zentrum O&M (Operation & Maintenance) gezeigt, bei dem ebenfalls ein Datenendgerät PC gezeigt ist. Dieses Service-Zentrum steht hier über eine Datenleitung mit dem Einwählknoten POP in Verbindung. Es wäre jedoch auch denkbar, daß dieses Service-Zentrum wie der Personal Computer TLPC den Einwählknoten über eine Leitung des Fernsprechnetzes erreicht, wie es auch umgekehrt möglich wäre, daß die Verbindung des Personal Computers TLPC des Fernsprechteilnehmers nicht wie dargestellt über das Telefonnetz sondern über eine Datenleitung Zugang zum Einwählknoten POP und damit zum speziellen Server WWW-S des Internet hat. In der Figur ist ferner mit gestrichelten Verbindungslinien die Möglichkeit angedeutet, daß der Zugang des Personal Computers (TLPC) eines Fernsprechteilnehmers oder eines Servicecenters (O&M-PC) über Verbindungswege des Internet INT erfolgt.

Wenn vom Fernsprechteilnehmer aus eine Verwaltung von Leistungsmerkmalen vorgenommen werden soll, wobei es sich in den meisten Fällen wie z. B. bei den Leistungsmerkmalen "Ruhe vor dem Telefon" und "Anzeige der Rufnummern abgehender Rufe" um ein Aktivieren oder Deaktivieren handeln wird, wie beim Leistungsmerkmal "Anrufumlenkung" aber auch Änderungseingaben in Frage kommen, dann wird entsprechend dem erfindungsgemäßen Verfahren der Fernsprechteilnehmer über das Fernsprechnetz und den Einwählknoten POP eine Internetverbindung seines Personal Computers TLPC herstellen. Er wird über seinen WWW-Browser die Rufnummer des zu verwaltenden Anschlusses, also seine Fernsprechrufnummer in Form einer Internet-Nachricht an den zum Einwählknoten gehörenden WWW-Server WWW-S übermitteln.

Aufgrund der erwähnten vermittlungstechnischen Applikation VTAS ist dieser Server in der Lage, diese Fernsprechnummer über die vermittlungstechnische Applikation VTALE an die Vermittlungstechnik VT der Ortsvermittlungsstelle LE2 weiterzugeben. Dies kann beispielsweise über eine ISDN-D-Kanal-Nachricht geschehen, wenn der Einwählknoten POP in Form eines ISDN-Primäranschlusses an die Ortsvermittlungstelle LE2 angeschlossen ist. Unter der Steuerung der vermittlungstechnischen Applikation VTALE bzw. der Vermittlungstechnik VT wird über das Telefonnetz T eine Verbindung zu der aus der Rufnummer erkennbaren Ortsvermittlungsstelle LE1 hergestellt, an die der anfragende Fernsprechteilnehmer mit seinem Personal Computer TLPC angeschlossen ist. Die Übermittlung dieser Nachricht kann dabei beispielsweise im Signalisierungskanal gemäß dem Signalisierungssystem Nr. 7 des Fernsprechnetzes erfolgen, siehe Verbindungspfeil zwischen den die Signalisierungssoftware symbolisierenden Blöcken No.7CC bei den beiden Ortsvermittlungsstellen. Der Fernsprechteilnehmer ist nun also in der Lage, von seinem PC aus unter Ausnutzung seines WWW-Browsers, der ihm eine entsprechend komfortable Benutzeroberfläche bietet, mit der Datenbasis seiner eigenen Fernsprechortsvermittlung LE zu kommunizieren. Der Datenaustausch zwischen PC und dem WWW-Server erfolgt dabei in Form des Austausches von Datenpaketen gemäß dem Internet-Protokoll (IP), wobei durch die vermittlungstechnische Applikation VTAS jeweils eine Umsetzung zur Fortführung dieser Kommunikation über das Fernsprechnetz erfolgt.

Wie oben schon angedeutet, ist das erfindungsgemäße Verfahren nicht auf die Leistungsmerkmalverwaltung vom Fernsprechteilnehmer aus beschränkt, sondern kann mit Vorteil auch zur Vermittlungsstellenverwaltung einschließlich der Teilnehmerverwaltung von der Service-Zentrale aus eingesetzt werden, wenn es also beispielsweise um Einrichtung neuer Fernsprechanschlüsse und dergleichen geht.

## Patentansprüche

1. Verfahren zum Verwalten von Leistungsmerkmalen für Fernsprechteilnehmer, wobei eine solche Verwaltung eine Kommunikation zwischen einer die Verwaltung vornehmenden Stelle und der Fernsprechvermittlungsstelle (LE1), in der die die Leistungsmerkmale betreffende Datenbasis (TB) enthalten ist, erfordert, **dadurch gekennzeichnet,**
**dass** eine solche Kommunikation unter Ausnutzung einer Internet-Verbindung eines mit einem Display versehenen und mit einem Internet-Browser arbeitenden Datenendgerätes (TLPC, PC), vorzugsweise Personal Computers, am Ort der die Verwaltung vornehmenden Stelle erfolgt,
wozu ein Internet-Server (WWW-S) zur Verfügung gestellt wird, der einerseits über eine Internet-Verbindung mit dem Datenendgerät (TLPC, PC) und andererseits über eine Fernmeldeverbindung mit der genannten Fernsprechvermittlungsstelle (LE1) kommunizieren kann.

2. Verfahren nach Anspruch 1, **dadurch gekennzeichnet, dass** die Verwaltung der Leistungsmerkmale von einer Service-Zentrale (O&M) und/oder vom Fernsprechteilnehmer aus erfolgt.

3. Verfahren nach Anspruch 1 oder 2, **dadurch gekennzeichnet, dass** der Zugriff des Datenendgerätes (TLPC, PC) auf das Internet über das Fernsprechnetz erfolgt.

4. Verfahren nach einem der Ansprüche 1 oder 2, **dadurch gekennzeichnet, dass** der Zugriff des Datenendgerätes (PC) auf das Internet über eine Datenleitungsverbindung (DL) erfolgt.

5. Anordnung zur Durchführung eines Verfahrens zum Verwalten von Leistungsmerkmalen für Fernsprechteilnehmer, aufweisend eine die Verwaltung vornehmende Stelle und eine die Leistungsmerkmale betreffende Datenbasis (TB) enthaltende, erste Fernsprechvermittlungsstelle (LE1), unter welchen eine für eine solche Verwaltung erforderliche Kommunikation stattfindet, wobei am Ort der die Verwaltung vornehmenden Stelle ein mit einem Display versehenes und mit einem Internet-Browser arbeitendes Datenendgerät (TLPC, PC), vorzugsweise ein Personal Computer, vorhanden ist, und wobei eine weitere Fernsprechvermittlungsstelle (LE2) vorhanden ist, in die ein Einwählknoten (POP) für das Internet integriert ist, der einen Internet-Server (WWW-S) aufweist, der einerseits über eine Internet-Verbindung (Int) mit dem Datenendgerät (TLPC, PC) und andererseits über eine Fernmeldeverbindung mit der ersten Fernsprechvermittlungsstelle (LE1) zu einer solchen Kommunikation verbunden ist, wobei
der Einwählknoten (POP) zur Ermöglichung einer Kommunikation mit der Vermittlungstechnik (VT) der weiteren Fernsprechvermittlungsstelle (LE2) eine vermittlungstechnische Applikation (VTAS) enthält, die einer die Vermittlungstechnik (VT) der weiteren Fernsprechvermittlungsstelle (LE2) ergänzenden vermittlungstechnischen Applikation (VTALE) entspricht.

6. Anordnung nach Anspruch 5, , **dadurch gekennzeichnet, dass** die Verwaltung vornehmende Stelle durch eine Service-Zentrale (O&M) und/oder durch einen Fernsprechteilnehmer repräsentiert ist.

## Claims

1. Method for management of features for telephone subscribers, whereby such management requires communication between a place performing the management and the telephone exchange (LE1), in which the database (TB) relating to the features is contained, **characterized in that** such communication takes place using an internet connection of a data terminal (TLPC, PC), preferably a PC, which is provided with a display and operating with an internet browser, at the location where the management is to be carried out, for which purpose an internet server (WWW-S) is provided, which can communicate both with the data terminal (TLPC, PC) via an internet connection, and with the said telephone exchange (LE1) via a telephone line.

2. Method according to Claim 1, **characterized in that** the management of features is carried out by a service center (O&M) and/or by the telephone subscriber.

3. Method according to Claim 1 or 2, **characterized in that** the data terminal (TLPC, PC) accesses the internet via the telephone network.

4. Method according to one of Claims 1 or 2, **characterized in that** the data terminal (PC) accesses the internet via a data line (DL).

5. Device for executing a method for managing features for telephone subscribers, having a location for performing the management and a first telephone exchange (LE1) containing the database (TB) relating to the features, under which any communication necessary for such management takes place, whereby a data terminal (TLPC, PC), preferably a PC, which is provided with a display and which operates with an internet browser, is available at the place where the management is carried out, and whereby a further telephone exchange (LE2) is available, into which a dial-in node (POP) for the internet is integrated, and which has an internet server (WWW-S), which is connected both via an internet connection (Int) to the data terminal (TPLC, PC) and also via a telephone line to the first telephone exchange (LE1), for the purpose of such communication, whereby the dial-in node (POP) for facilitating communication with the switching systems (VT) of the other telephone exchange (LE2) contains a switching application (VTAS), which corresponds to a switching application (VTALE) that extends the switching systems (VT) of the other telephone exchange (LE2).

6. Device according to Claim 5, **characterized in that** the place performing the management is represented by a service center (O&M) and/or by a telephone subscriber.

## Revendications

1. Procédé pour la gestion de caractéristiques pour des abonnés au téléphone, une gestion de ce type demandant une communication entre un poste effectuant la gestion et le central de commutation téléphonique (LE1) qui contient la base de données (TB) concernant les caractéristiques, **caractérisé par le fait qu'**une communication de ce type est réalisée en utilisant une liaison Internet d'un terminal de données (TLPC, PC), de préférence un ordinateur personnel, muni d'un écran d'affichage et travaillant avec un navigateur Internet, à l'endroit où se trouve le poste effectuant la gestion, ce pour quoi un serveur Internet (WWW-S) est mis à disposition, lequel peut communiquer d'une part via une liaison Internet avec le terminal de données (TLPC, PC) et d'autre part via une liaison téléphonique avec le central de commutation téléphonique (LE1) mentionné.

2. Procédé selon la revendication 1, **caractérisé par le fait que** la gestion des caractéristiques est effectuée à partir d'un central de services (O&M) et/ou de l'abonné au téléphone.

3. Procédé selon la revendication 1 ou 2, **caractérisé par le fait que** l'accès du terminal de données (TLPC, PC) à Internet s'effectue via le réseau téléphonique.

4. Procédé selon l'une des revendications 1 ou 2, **caractérisé par le fait que** l'accès du terminal de données (PC) à Internet s'effectue via une liaison à lignes de données (DL).

5. Dispositif pour la mise en oeuvre d'un procédé pour la gestion de caractéristiques pour des abonnés au téléphone, comportant un poste effectuant la gestion et un premier central de commutation téléphonique (LE1) contenant la base de données (TB) concernant les caractéristiques, entre lesquels une communication nécessaire à une gestion de ce type a lieu, un terminal de données (TLPC, PC), de préférence un ordinateur personnel, muni d'un écran d'affichage et travaillant avec un navigateur Internet étant prévu à l'endroit où se trouve le poste effectuant la gestion et un autre central de commutation téléphonique (LE2) étant prévu dans lequel est intégré un noeud de sélection (POP) qui est destiné à Internet et qui comporte un serveur Internet (WWW-S) qui est relié d'une part via une liaison Internet (Int) au terminal de données (TLPC, PC) et d'autre part via une liaison téléphonique au premier central de commutation téléphonique (LE1) en vue d'une communication de ce type, le noeud de sélection (POP) contenant pour permettre une communication avec la technique de commutation (VT) de l'autre central de commutation téléphonique (LE2) une application de technique de commutation (VTAS) qui correspond à une application de technique de commutation (VTALE) complétant la technique de commutation (VT) de l'autre central de commutation téléphonique (LE2).

6. Dispositif selon la revendication 5, **caractérisé par le fait que** le poste effectuant la gestion est représenté par un central de services (O&M) et/ou par un abonné au téléphone.
